(19) Europäisches Patentamt / European Patent Office / Office européen des brevets

(11) **EP 3 996 515 B1**

(12) **EUROPEAN PATENT SPECIFICATION**

(45) Date of publication and mention
of the grant of the patent:
**02.10.2024 Bulletin 2024/40**

(21) Application number: **20737045.3**

(22) Date of filing: **10.07.2020**

(51) International Patent Classification (IPC):
**A23G 1/52** $^{(2006.01)}$  **A23G 1/54** $^{(2006.01)}$

(52) Cooperative Patent Classification (CPC):
**A23G 1/52; A23G 1/54**

(86) International application number:
**PCT/EP2020/069652**

(87) International publication number:
**WO 2021/009076 (21.01.2021 Gazette 2021/03)**

(54) **METHOD AND APPARATUS FOR PREPARING AN AERATED FOOD COMPOSITION**

VERFAHREN UND VORRICHTUNG ZUR HERSTELLUNG EINER MIT LUFT DURCHSETZTE
LEBENSMITTELZUSAMMENSETZUNG

PROCÉDÉ ET APPAREIL POUR LA PRÉPARATION D'UNE COMPOSITION ALIMENTAIRE AÉRÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.07.2019 EP 19186084**

(43) Date of publication of application:
**18.05.2022 Bulletin 2022/20**

(73) Proprietor: **Société des Produits Nestlé S.A.
1800 Vevey (CH)**

(72) Inventor: **LEADBEATER, Richard,John
York YO91 1XY (GB)**

(74) Representative: **Slaven, John William
Société des Produits Nestlé S.A.
Avenue Nestlé 55
1800 Vevey (CH)**

(56) References cited:
**EP-A2- 1 348 342          EP-A2- 1 731 040
WO-A1-2013/139615     WO-A1-2015/165926
WO-A1-2016/150977     WO-A1-2018/054746
WO-A1-2018/206471     DE-A1- 3 521 612
US-A- 3 260 210**

**Description**

The present subject matter relates to an apparatus for depositing a liquid, semi-liquid or semi-solid food composition that also comprises inclusions and products made by this method.

BACKGROUND

It is known to deposit liquid, semi-liquid or semi-solid food compositions in confectionery manufacturing processes. Such products may, for example, be deposited into a mould cavity for producing a finished confectionery product. One example of such a process is the depositing of liquid chocolate into a mould cavity for the production of a chocolate bar.

In order to produce certain types of food composition, it is sometimes desirable to deposit food compositions (or components thereof) under high pressure, for example to deposit at high speeds (e.g. on a fast moving production line) and/or when producing aerated products e.g. where gas is added to the food composition under pressure.

It is desirable to add a gas into liquid chocolate prior to depositing. This process is typically known as aeration, and can be used to provide different effects according to the pressures and gases used.

For example, adding gas to liquid chocolate prior to depositing can result in a chocolate product with visible bubbles in the final chocolate product; a process typically known as "macro aeration".

By way of a further example, adding gas to liquid chocolate prior to depositing can result in a chocolate product where the bubbles that are formed are too small to be seen by the naked eye in the final chocolate product; a process typically known as "micro aeration".

Mixing solid inclusions such as raisins or nut pieces into aerated food compositions presents a challenge. As the inclusions are mixed into the composition, they tend to break down the foam or, when inclusions are present before aeration, they reduce the effectiveness of foam generation. Food compositions such as confectionery compositions (e.g. chocolate) are typically handled and deposited via conduits and orifices which have sizes comparable to or smaller than that of common inclusions. This is particularly necessary where the process involves holding the product under pressure until the point of deposit. Therefore, adding inclusions to these compositions may restrict or block the flow of product. Accordingly, it is desired to find a solution to the problem of in the depositing food compositions that also have inclusions therein for example depositing aerated chocolate with inclusions.

WO 2010-102716 describes an example of an apparatus for depositing a liquid, semi-liquid or semi-solid food composition, the apparatus comprising: a fixed volume chamber for receiving the food composition under a positive pressure, the chamber being defined by chamber walls, one of the chamber walls being provided with an outlet orifice for depositing the food composition, the outlet orifice being provided with a first sealing surface; and a valve spindle arranged for reciprocating movement within the chamber, the length direction of the valve spindle extending substantially perpendicular to the chamber wall in which the outlet orifice is provided, a first end of the valve spindle being provided with a second sealing surface; wherein the second sealing surface of the valve spindle is arranged for abutting the first sealing surface of the outlet orifice to thereby close the outlet orifice.

EP2016837 discloses an apparatus with at least one discharge passageway extending to at least one elongate discharge outlet for depositing a confectionery mass, wherein at least one discharge passageway diverges in a direction towards the discharge outlet. It is described in paragraph [0014] that generally, in a plan view, the discharge passageway can be described to have the shape of a fishtail and that, described three-dimensionally, the passage is a hollow truncated pyramid, with the discharge outlet constituting the base, and the inlet end of the discharge passageway constituting the upper part of the pyramid. It is described in paragraph [0010] in EP2016837 that the length of the discharge outlet extends substantially perpendicular to a direction in which molds or any other molding means is moved relative to the discharge outlet, hence the confectionery mass can be deposited into the molds in the shape of relatively wide strips. It is described in paragraph [0011] in EP2016837 that depositing a relatively wide strip of aerated confectionery mass into a mould can reduce a need for shaking or vibrating of the mould.

EP2016836 describes deposition of aerated chocolate combined with inclusions where multiple layers of micro-aerated chocolate are formed in a mould with the option of sprinkling inclusions between each layer after they have been deposited. EP2016836 teaches that it is not possible and indeed undesirable to mix inclusions directly to the aerated mass as it is being deposited in the mould but that the aerated chocolate must be formed separately.

WO2015165926 relates to the use of an air lock type principle, with an intermediate zone which can either be pressurised or not depending on the valve position at the entrance and exit of this section.

EP1348342, EP1731040, and WO2013/139615 all disclose the mixing and dispensing of particulates into a frozen or ice mass.

US3260210 discloses a pump for admixing solid or semi-solid ingredients to a viscous fluid under pressure.

WO2018/054746 discloses a food composition comprising a high-melting fat, a medium-melting fat, and a low-melting fat that provides excellent aeration properties at low levels of saturated fat.

WO2016/150977 discloses a process for providing a more stable aerated fat-based confectionery material which has improved taste and is made from natural ingredients.

WO2018/206471 discloses a process utilizing a density modifying chamber that allows the density of the aerated mass to be modified to match that of the inclusions being added.

DE3521612 discloses a process and an apparatus for the metered admixture preferably of large particulate accompanying material to ice cream in the course of continuous production.

In terms of the incorporation of inclusions into foodstuffs at there are a number of challenges, both at the process and product level, which increase when the foodstuff is held at high pressure for example confectionery products like aerated chocolate.

An aerated product such as aerated chocolate is inherently unstable, any form of mechanical stress causes de-stabilisation of the foam and coalescence. Aeration leads to an increase in viscosity and therefore poor flow in the mould. The addition of inclusions increases the viscosity further. Any method developed needs to minimise this effect as much as possible.

Chocolate aeration is undertaken in a pressurised system, incorporation of inclusions whilst maintaining pressure is complex engineering challenge. Typical nozzle diameters for depositing systems are less than 4 mm. This limits the size of inclusions that can be deposited (assuming they can be dosed into a pressurised system first). Increasing the nozzle diameter is not an option as the system pressure drop would be too great. There is also the risk of the inclusions blocking the nozzle. Existing solutions have focused on over-aerating chocolate (to compensate for any gas loss) and blending the inclusions post pressure release into the pre-aerated chocolate. This however results in either visible aeration (in the case of micro-aeration) or destruction of bubbles and significant loss of aeration (in the case of macro-aeration).

Accordingly, it is desired to find a solution to the problem of depositing of aerated chocolate and with inclusions.

## SUMMARY OF THE INVENTION

The invention is defined as stipulated in the appended claims.

The present invention enables the provision of aerated products with inclusions where the incorporation of the inclusions does not destabilize the aeration of the product. Additionally, very preferably for where the aeration is micro-aeration, the process of the present invention enables the provision of a product including inclusions without the incorporation of an undue amount unwanted air bubbles, i.e. substantially no incorporation.

The product advantages of this process are:

- The inclusions are well mixed into the food composition mass, meaning the risk of visible uncoated inclusions is avoided (on the back of chocolate bars, for example)
- Inclusions will be better distributed within the food composition, it removes the need for a portion of the food composition to be deposited first before the inclusions were deposited and again after inclusion depositing finished, meaning that the first and last portions have a lower % of inclusions.

The present invention also provides an apparatus for preparing the claimed products and carrying the claimed processes.

## DESCRIPTION OF THE DRAWINGS

Embodiments are described, by way of example only, with reference to the accompanying drawings, which are described below.

Figure 1: Showing the micro-aerated Crunch® bar produced (far right) versus current products.
Figure 2: 10.2% Micro-aerated Larin® (top) versus current product (bottom).
Figure 3: 10.2% Micro-aerated Larin® appearance of top and back of bars.
Figure 4: Showing the back of the bar Crunch® micro-aerated without inclusions. The black spots visible on the bar without inclusions are clearly unacceptable from a quality perspective.

## DETAILED DESCRIPTION

Although particular embodiments are described herein, it will be appreciated that the claimed subject matter is not limited to the specific embodiments described, and that alternative configurations are possible within the scope of the appended claims.

The present invention provides a process as defined in the appended claims.

As used herein the term 'inclusion' denotes an edible body and/or particle of distinct composition which is embedded (or capable of being embedded) wholly or partially in a food composition. Inclusions are often used to provide contrasting texture, hardness, visual appearance and/or flavour to the material in which they are embedded thus a unique eating and sensory experience to the consumer consuming the product. Typically, more than one inclusion will be incorporated in single portion of the food composition that comprises inclusions. It can be desirable in many products for inclusions to be dispersed as evenly as possible within the product (or within a sub-set of the product such as in a layer or filling thereof) so each mouthful of the product provides a consistent eating experience.

The food composition is preferably a confectionery product, preferably a fat-based confectionery product and preferably ambient confectionery (i.e. is not frozen confectionery, e.g. ice cream). The food composition is chocolate or compound, as defined below.

The invention is preferably applicable to micro-aerated products given the challenges of maintaining aeration on a non-visible scale. However, alternatively, the invention may relate to macro-aeration.

In a preferred embodiment, the positive-displacement pump is a rotary pump, a reciprocating pump or a linear pump. The nature of the positive displacement pump is preferably determined by its ability to maintain the pressure of the system in contrast to other mixing apparatus.

In an embodiment, the rotary pump is preferably a rotary vane pump, preferably a flexible vane or sliding vane pump.

A rotary vane pump preferably comprises a rotor encased in a housing and at least one vane, wherein when the rotor rotates the vanes trap fluid drawing fluid through the pump.

In an embodiment, the reciprocating pump is a piston pump or a plunger pump.

In a preferred embodiment, the vane pump comprises at least two vanes, at least three vanes, at least four vanes or at least five vanes. In a preferred embodiment, the vane pump comprises less than or equal to 20 vanes, less than or equal to 15 vanes or less than or equal to 10 vanes. In a preferred embodiment, the vane pump comprises between 1 and 10 vanes. In a preferred embodiment, the use of more vanes provides an improvement in the pressure maintenance. In a preferred embodiment, the use of 3 or more vanes provides an optimum in maintaining the pressure in the pump.

In an embodiment, in the pump the volume between the vanes moves from a pressurised to a non-pressurised state whilst rotating. The vanes are used to provide a constant seal between the wall of the pump and the tip of the vane. This is entirely different from pumps that us a valve arrangement (either opened or closed), for example, those of WO2015165926.

In a preferred embodiment, the reciprocating pump comprises at least two pistons or plungers, at least three pistons or plungers, at least four pistons or plungers or at least five pistons or plungers. In a preferred embodiment, the pump comprises less than or equal to 20 pistons or plungers, less than or equal to 15 pistons or plungers or less than or equal to 10 pistons or plungers. In a preferred embodiment, the pump comprises between 1 and 10 pistons or plungers. In a preferred embodiment, the use of more pistons or plungers provides an improvement in the pressure maintenance. In a preferred embodiment, the use of 3 or more pistons or plungers provides an optimum in maintaining the pressure in the pump.

In a preferred embodiment, the above reciprocating pump comprises plungers or pistons that rotate when depositing the inclusions in order to maintain pressure. A potential pump is available from Gram Equipment A/S under IF ingredient feeders.

In an embodiment of the present invention, the gaps between the vanes, for example, and the piston/plunger chambers are termed cavities. In a preferred embodiment, the cavities are evenly distributed around the rotor. The size of the cavities can be determined based on the size of the inclusions.

In an embodiment, the speed of the pump, i.e. the rate of inclusion incorporation, affords control of the homogeneity of inclusions when blended with the aerated food composition. However, this is dependent on the throughput capacity of the pump.

In a preferred embodiment, the pump operates at a speed of between 0.0167Hz and 3.33Hz, preferably between 0.0833Hz and 1.67Hz. In a preferred embodiment, these speeds relate to the rate of rotation of the rotor and/or cavities.

In a preferred alternative embodiment, the pump operates at a speed of between 1Hz and 100Hz, preferably between 10Hz and 75Hz, and more preferably between 20Hz and 60Hz or between 25Hz and 50Hz.

In an alternative embodiment, the pump operates at a speed of between 5rpm and 100rpm, preferably between 10rpm and 75rpm or between 20rpm and 65rpm.

In an embodiment, the inclusions are fed between vanes of the pump, wherein the vanes retract when the inclusions reach the fluid aerated food composition or wherein the inclusions are fed into a chamber of a piston or plunger pump and the piston or pump deposits the inclusions into the aerated food composition.

The pumps used in the present invention have been previously used in the field of ice-cream inclusion deposition. However, owing to the differences in aeration between ambient foodstuffs, preferably fat-based food compositions, preferably chocolate and/or compound, and ice-cream (ice crystal foam versus aeration in a fat-based matrix) and sugar-dissolved in ice cream versus chocolate being a suspension of sugar and other particles, as well as the difference in temperatures, fluid flow, pressures etc., the use of such pumps has not previously been envisaged for use in depositing inclusions in aerated chocolate-products and would not be considered to be an obvious modification of prior art processes.

Furthermore, it is also noted that frozen ice cream is a relatively stable foam and is certainly a far more stable product than aerated chocolate. It is possible to manually mix inclusions into ice cream by hand without substantially destroying the aeration quality. This is not possible with aerated chocolate. Accordingly, the two materials are not comparable and it would be understood that production processes would not be inter-changeable between the two products.

It is also noted that the problems faced when adding inclusions to food products other than ice-cream, preferably moulded food products, are different. For example, the visual appearance of ice-cream is less important than a moulded food product, where the inclusions should preferably be encapsulated in the moulded food product. This is even more key when the food product is aerated, as the visual impact of inclusions on ice-cream aeration is insignificant.

In a preferred embodiment, the inclusions are fed into the pump via an entry port at the top of the pump.

There is no particular limitation of how the inclusions are fed into the pump. However, particular introductions methods may be chosen dependent on the inclusion being added. For instance, for powders a twin screw feeder may be used.

In a preferred embodiment, the inclusion feed operates at a speed of between 1Hz and 150Hz, preferably between 10Hz and 125Hz and more preferably between 20Hz and 100Hz or between 40Hz and 90Hz.

In an alternative embodiment, the pump operates at a speed of between 5rpm and 100rpm, preferably between 10rpm and 80rpm or between 20rpm and 65rpm.

In a preferred embodiment, the pressure at the entry port is ambient pressure, e.g. atmospheric pressure, 1.0 bar.

In an embodiment, an additional vacuum pump at the entry may be utilized to maintain the necessary pressure for the aerated food composition. Such a pump is particularly beneficial when larger inclusions or the inclusions are highly porous (for example extruded rice crispies) are used, i.e. the use of a vacuum pump reduces the amount of atmospheric air incorporated.

In a preferred embodiment, the feed stream of the aerated food composition is under pressure of between 1.10 and 20 bar, preferably between 1.25 and 20 bar, preferably between 1.5 and 15.0 bar or preferably between 1.2 and 10.0 bar (for example, between 1.1 and 5.0 bar or between 1.5 and 3.5 bar).

Accordingly, the positive displacement pump has a pressure gradient across the pump, wherein preferably the number of vanes or plunger/piston and/or pump speed enables the maintenance of the pressure despite the incorporation of inclusions. The above is important as it enables the maintenance of degree of the aeration of the food composition.

In an embodiment of the invention, an additional mixer, preferably an inline mixer i.e. placed at the outlet of the positive-displacement pump, is used to provide an additional homogenization step. In a preferred embodiment, the mixer, preferably an inline mixer operates, at a speed of between 1 and 100 RPM. The mixer may be a dynamic mixer.

The degree of aeration is between 1% and 20% gas by volume of the food composition.

In preferred embodiments, the aeration may be measured as follows:

1. Porosity is measured using a sampling point after aeration but before the inclusions feeder (following prior validation that the porosity from the depositor corresponds to that from the sampling point). The weight of a defined volume of non-aerated chocolate is compared to the weight of the same volume following aeration, the % difference corresponding to the porosity level.
2. X-ray tomography on the solid bars, to determine the porosity and bubble size distribution.
3. A density balance may also be used.

In an embodiment, the gas used to aerate is any suitable gas, i.e. an inert gas. Typically, the gas is selected from the group consisting of nitrogen, carbon dioxide, nitrous oxide and argon. The gas may be air. Preferably, the gas is nitrogen.

Without wishing to be bound by any theory, the applicant believes that the introduction method of inclusions of the present invention may reduce the tendency for de-stabilisation of aeration during deposition and/or mixing by minimizing any pressure loss nor introduction of atmospheric air into the product.

Accordingly, in an embodiment, the aerated food composition comprising inclusions has an aeration degree of between 99.5% and 65% of the aeration degree of the aerated fluid pre-dosing of inclusions, preferably between 75% and 98% or between 80% and 95% or between 85% and 95%.

In a preferred embodiment, fluid chocolate and solid inclusions may be deposited into a mould as the substrate to form an aerated moulded chocolate, which also comprises inclusions, in a manner where the aeration is maintained.

Cooling of the deposited food composition may be achieved using known methods.

AERATION

Aerating edible fluids (such as aerated chocolate) are advantageous. One of the reasons for this is the drive for the development more permissible confectionery, combined with improved consumer perception. The methods of the present invention allow aerated compositions to be produced that also have inclusions therein.

Aeration delivers the same size impression but with less chocolate. By reducing the amount of chocolate it is possible to increase the level of inclusions (typically the healthier component of such a product, lower in sugar). Consumer perception is improved in terms of a greater number of inclusions being visible on the top surface of the bar. Contrast between inclusion and chocolate is greater, again positively impacting perception of more inclusions

A cost benefit is that less chocolate (and potentially inclusions) are required to deliver a product of the same volume as products made by prior art methods.

Unless otherwise indicated herein, in the embodiments and examples of the invention described herein used to deposit aerated material such as chocolate mass, the aeration was achieved using a gas injector as described in more detail in WO2005/063036. It will be appreciated that this equipment is by way for example only and non-limiting and other suitable aeration means known to those skilled in the art could also be used.

Preferably, the gas bubbles are produced in the aerated compositions of the invention using an aerating means comprising a machine selected from one or more of the following and/or components thereof:

(i) a rotor stator mixer;
(ii) a gas injector where the gas is injected into an (optionally high pressure) fluid at an injection site at a pressure higher than atmospheric pressure and lower than the fluid pressure and;
(iii) a jet depositor for depositing fluid onto a substrate under positive pressure; and/or
(iv) a modular mixing head with a plurality of different sets of rotor stators.

Each of these aerating machines (i) to (iv) are described more fully herein.

The rotor stator mixer may comprise at least one rotor state mixing head such as those rotor stators available commercially from Haas under the trade designation Mondomix®.

The gas injector may be injected into a fluid where preferably the fluid has an operating pressure of from 1.25 to 30 bar, preferably from 2 to 30 bar.

The fluid may be transported by at least two pumps to pass an injection site being located between said pumps. Advantageously, by injecting gas between two pumps the pressure at the injection site may be lower than and/or shielded from the pressure in the rest of the apparatus. Inert gas may be dispersed into the fluid by injection at the injection site at high gas pressure (greater than atmospheric pressure).

More usefully at gas pressure at the injection site may be less than or equal to 9 bar and/or the system pressure may be at least 9 bar after the injection site. Most usefully suitable gas injectors may comprise those gas injectors as defined herein and/or are described in WO2005/063036.

As used herein the term 'jet depositor' refers to an apparatus for depositing a fluid food composition (e.g. a liquid, semi-liquid or semi -solid food) under positive pressure (i.e. pressure above ambient pressure). A preferred jet depositor comprises a reciprocating valve spindle to deposit the food and/or is as described in the applicant's patent application WO2010/102716.

Usefully in the process of the invention the composition is pumped by at least two pumps to pass an injection site being located between said pumps, where the inert gas is dispersed into the composition by injection at the injection site at high gas pressure, more usefully the gas pressure being greater than or equal to 9 bar.

More preferably, the aerating means used herein comprises an apparatus where the gas is injected into the composition in between at least one pump, preferably at least two pumps, usefully at a pressure of from 2 to 30 bar, more usefully from 4 to 15 bar, even more usefully from 6 to 12 bar, most usefully from 8 to 11 bar, for example 9 bar or 10 bar.

For preparing the micro-aerated choco-material of and/or used in of the present invention gas injectors such as that described in WO2005/063036 injectors offers several advantages. Firstly, the gas injection is effectively isolated from any pressure fluctuations occurring in the rest of the system. This gives a more stable gas flow into the product. Secondly, these injectors can optionally operate at higher pressures compared to conventional rotor stator systems (9 bar is a typical operating pressure for a WO2005/063036 injector compared to 6 bar typical operating pressure for a mixer using a rotor stator mixing head such as a Mondomix® mixer). When a gas injector is attached to a jet depositor, this is additionally useful as higher flow rates can be delivered with consequent faster line speeds. Thirdly, the whole system is fully pressurised up to the point of deposit. This results in significant advantages described herein such as optimising final aeration quality and reducing the opportunity for bubble coalescence.

In a preferred embodiment, the gas is dispersed into a food composition, preferably a molten chocolate product, at a volume flow rate of from greater than 0.25 l/min, preferably greater than 0.4 l/min, preferably greater than 0.6 l/min and more preferably greater than 0.7 l/min. In a preferred embodiment, the volume flow rate is less than 1.5 l/min, preferably less than 1.25 l/min or less than 1.0 l/min. Accordingly, in an embodiment of the present invention, the volume flow rate is between 0.25 l/min and 1.5 l/min.

In a preferred embodiment, the gas is dispersed into a liquid food composition, preferably a molten chocolate product, the gas is dispersed into the composition when the composition is at a temperature of from 26 to 33°C, more usefully from 28 to 32°C, most preferably from 29 to 31°C.

It will be appreciated that to achieve a desired gas flow and temperature, other parameters of the specific equipment used may need to potentially be adjusted (such as mixer speed, system pressure and/or jacket temperature). How to do so for a particular system (to achieve any given gas flow and temperature target) will be within the skill of a skilled person in the art in view of the disclosures of this specification.

In an embodiment of the present invention the throughput of the liquid may be controlled as appropriate, for example between 25 kg/hr to 500 kg/hr or indeed between 1000kg/hr to 4500kg/hr. The gas flow rate and other process parameters may be controlled as appropriate to yield the desired product.

INCLUSIONS

The aerated compositions of the invention comprising one or more inclusions may preferably comprise an aerated confectionery fat based composition, for example a fat based confectionery composition such as filling and/or a choco-material.

The aerated compositions of the invention comprise the inclusions at between 1.0 wt% and based on the total weight of the food composition 45.0wt% based on the total weight of the food composition, between 1.0 wt% and 40.0 wt%, between 1.0 wt% and 35.0 wt%, between 1.0 wt% and 30.0 wt%, preferably between 2.0 wt% and 25.0 wt%, between 3.0 wt% and 20.0 wt%, between 5.0 wt% and 16 wt%, or between 8.0 wt% and 16.0wt%.

Preferred inclusions have an average size from 1 to 50 mm, from 2 to 40 mm, from 3 to 25 mm or from 5 to 10 mm or from 2 to 6 mm.

In a further embodiment of the invention the aerated food composition of the invention comprise inclusions with an average diameter greater than 2 mm, for example inclusions which are retained by a sieve with a 2 mm opening. The inclusions may have a diameter ranging from 2 mm to 22.6 mm, for example inclusions, which pass through a sieve with an opening of 22.6 mm but are retained by a sieve with a 2 mm opening. The inclusions may have a diameter ranging from 2.83 mm to 11.2 mm, for example inclusions, which pass through a sieve with an opening of 11.2 mm but are retained by a sieve with a 2.83 mm opening.

Alternatively, the inclusions are in the form of a powder, preferably the powder may be selected from cocoa powder, fruit powder, and/or dairy powder.

In an embodiment, the powder has a particle size, d50 (preferably a diameter where 50% of the mass of the particles in the sample have a diameter below that value), preferably in the range of 10 to 200 microns, preferably 20 to 80 microns or 20 to 150 microns. For example, 10 to 100 microns, 25 to 100 microns or 35 to 80 microns or 10 to 40 microns. Preferably, laser diffraction is used to measure the particle size, d50 using a Malvern Mastersizer 2000, Method Scirocco 2000 dry attachment, Fraunhofer scattering theory.

Conveniently in one embodiment the inclusions are distributed substantially homogenously (evenly and uniformly) initially within fluid composition in the process of the invention. Usefully in another embodiment the inclusions are distributed in a predetermined pattern (which may not be homogenous) within the fluid composition in the process of the invention where the pattern is for example aesthetically pleasing to the end consumer. However, the preferred method of the present invention relates to an even and uniform distribution throughout a product.

Conveniently, the inclusions comprise any of the following non-limiting list (more conveniently selected from the group consisting of):

fruits or fruit pieces which may comprise: hard fruits (e.g. nuts such as hazelnuts, almonds, brazil nuts, cashew nuts, peanuts, pecans and/or similar); soft fruits (e.g. raisins, cranberries, blueberries, blackcurrant, apples, pear, orange, apricot and/or similar); and/or freeze-dried fruit pieces, candied fruit and/or alcohol-soaked fruit, preferred soft fruits are dried fruits;

crispy inclusions (e.g. caramel, coffee, biscuits, wafer, etc.);

herbs (for example chives, dill, coriander, parsley);

cereals (for example puffed rice, puffed wheat, extruded cereal pieces),

chocolate or choco material (for example chocolate vermicelli, chocolate shapes);

sugar confectionery (for example cinder toffee pieces, toffee, fudge, caramel, fondant pieces, jelly pieces marshmallow, sugar-panned centres such as those available commercially from Nestlé under the trade mark mini SMARTIESO) and/or

any suitable mixtures and/or combinations thereof.

It will be appreciated that an inclusion may fall into more than one of the above categories listed above.

In one embodiment of the invention the inclusions selected are a mixture of a plurality of different inclusions, where each inclusion has a similar size (usefully within 20%, more usefully $\pm 10\%$, most usefully $\pm 5\%$ of the average size of the mixture) so the size range of the inclusion mixture is narrow, more preferably the size of each inclusion is substantially the same. This allows the geometry and size of the nozzle to be more closely match to the size distribution of the inclusions used.

If different inclusions, particularly inclusions with different sizes and/or densities, are utilized, the inclusions may be fed separately into the same positive displacement pump or more than one displacement pump (e.g. a different pump is used to mix each different inclusion and the chocolate feeds are deposited separately into the same mould).

In another embodiment of the invention the inclusions selected are the same and not a mixture of different inclusions so the size of the inclusions are substantially the same.


PRODUCT

In general the terms 'product' and 'composition' (such as 'confectionery composition' and 'confectionery product') may be used interchangeably herein unless the context clearly indicates otherwise, the difference between them being generally that a product is in a final or almost final form ready or acceptable to be commercialized and eaten by an end consumer and is typically sold under a brand name. Thus, a product may have a plurality of different domains and textures of which a composition may comprise only one part. A composition (which may also be a product) may also be a component and/or ingredient used to prepare a product.

The present invention further relates to a confectionery product, for example a chocolate product such as a chocolate tablet and/or chocolate bar, aerated and having dispersed therein (optionally visible) inclusions provided by a method described herein.

The present invention further relates to a confectionery product, for example a chocolate product such as a chocolate tablet and/or chocolate bar, filled with an aerated filling of the invention and having dispersed therein (optionally visible) inclusions provided by a method described herein. If the filling is enclosed within an opaque outer shell the inclusions will not be visible when the product is eaten.

Preferably, the confectionery product comprises from 1 to 50%, more preferable from 1 to 30% and even more preferably from 2 and 20%, for example 8 to 16%, by weight of inclusions with respect to the weight of the filling (being 100% by weight).

In one embodiment of the invention confectionery products comprise an aerated choco-material such as compound or chocolate.

In another embodiment of the invention comprises a filled confectionery product, that comprises from 20 to 70% by weight of the product of an aerated composition of the invention (preferably an aerated filling). The remainder of the product being a shell of choco-material such as compound or chocolate that substantially encloses (preferably completely encloses) the product. Even more preferably in the filled pralines of the inventions the aerated filling comprises from 1 to 70% by weight (with respect to the weight of filling) of inclusions homogenously dispersed therein.

In yet other embodiment of the invention comprises a filled confectionery product, such as a praline, that comprises from 20 to 40%, more preferably from 25 to 35%, most preferably about 30% by weight of the product of an aerated filling of the invention optionally with 1 to 70% by weight of the filling of inclusions homogenously dispersed therein.

In still other embodiment of the invention comprises a filled confectionery product, such as a filled chocolate tablet or bar, which comprises from 50 to 70%, more preferably from 55 to 65%, most preferably about 60% by weight of the product of an aerated filling of the invention optionally with inclusions homogenously dispersed therein.

Usefully the choco-material is chocolate or compound, more usefully chocolate, most usefully dark and/or milk chocolate, for example milk chocolate such as a moulded milk chocolate tablet with inclusions (optionally fillings therein).

Usefully the confectionery product of the invention comprises chocolate or compound, more usefully chocolate, most usefully dark and/or milk chocolate, for example milk chocolate such as a moulded milk chocolate tablet (optionally with inclusions and/or fillings therein).

It will also be understood that the terms top and bottom referring to a product may be interchangeable and depend for example how the product is formed and its orientation under gravity. Thus for example the top of a product in use or when packed may be the bottom of the product when formed in a mould during production. The term 'substantially horizontal' refers to a plane through an axis of the product which during storage, transport and display of the product in store is likely to be held substantially horizontal, e.g. where the product is stored flat on a largely (preferably exactly) horizontal surface. A substantially horizontal surface is typically parallel to the major plane of the product, for example the flat bottom side of large area of a filled chocolate tablet. As used herein 'substantially vertical' refers to lines or planes which are substantially perpendicular (preferably perpendicular) to a substantially horizontal (preferably exactly horizontal) line or plane as defined herein. Preferred substantially vertical orientation is vertical, especially aligned with the direction of gravity in the typical position of the product in storage, transport and/or display.

NATURE OF BUBBLES

It has been known to prepare chocolate containing gas bubbles (commonly nitrogen or carbon dioxide). However, such products typically the bubbles are visible to the consumer (such as in the products sold by the applicant under the Aero® registered trade mark). Such visible bubbles with an average diameter of 100 microns or above are commonly known as macro-aeration. Chocolate with bubbles of a size which are sufficiently small so the bubbles are not visible to the naked eye, typically with an average bubble diameter of less than 100 microns is known as micro-aeration. There are technical challenges with micro-aerating chocolate. For example, the gas must be injected into the chocolate mass in a more precise method using specialized equipment otherwise there is a risk that the bubbles may coalesce to form larger bubbles. Care has to also be taken in terms of depositing. Micro-aerated chocolate mass is very sensitive to any form of mechanical stress, which causes coalescence. A pressurised deposit, directly into the mould is therefore generally required to ensure optimal aeration quality.

However, in view of the stability and homogeneity afforded by the mixing method of the present invention, it is possible to use a non-pressurised deposit without any loss of aeration stability nor aeration degree. This is highly surprising and advantageous, when the chocolate or compound product contains inclusions, as loss of aeration is a key issue when incorporating inclusions.

Conveniently the plastic viscosity (PV) of the pre-aerated choco-material of the invention is measured herein according to ICA method 46 (2000) under standard conditions unless otherwise stated and more preferably is from 0.1 to 10 Pa.s. In an embodiment, this may be measured using a Haake VT550.

The micro-aerated choco-material of the invention described herein (and/or made according to any process of the invention as described herein) has a total bubble surface area (TSA) of from 0.5 to 2.2, preferably from 0.5 to 1.5, preferably from 0.5 to 1.2; preferably from 0.55 to 1.10, more preferably from 0.6 to 1.0; most preferably from 0.65 to 0.90, for example from 0.7 to 0.8 m$^2$ per 100 g of the aerated choco-material. The term surface area or total surface area (TSA) referred to herein can be calculated from equation (1) herein and/or measured by any suitable apparatus or method known to those skilled in art. In one embodiment of the invention the TSA is a specific surface area (SSA) and may be measured as described in the article 'Determination of Surface Area. Adsorption Measurements by Continuous Flow Method' F. M. Nelsen, F. T. Eggertsen, Anal. Chem., 1958, 30 (8), pp 1387-1390 for example using nitrogen gas and SSA calculated from the BET isotherm.

Equation (1):

$$TSA = \frac{3.P.m_{ac}}{d_{ac}.r} \qquad (1)$$

where TSA is total bubble surface area, $P$ is porosity of the aerated choco-material, $m_{ac}$ is mass of aerated composition (g), $d_{ac}$ is density of aerated composition (g/cm$^3$) and $r$ is the radius of a bubble of mean size (cm) and the values for, P are from 11 to 19%.

The value of d and r could be in metre and the P value as a ratio, in line with the units for TSA above.

In the invention, $d_{ac}$ is density of aerated composition (g/cm$^3$), which is lower than the density of a non-aerated composition. In an embodiment, the $d_{ac}$ is less than 1.33 g/cm$^3$, less than 1.30 g/cm$^3$, less than 1.25 g/cm$^3$, less than 1.20 g/cm$^3$, less than 1.18 g/cm$^3$, less than 1.15 g/cm$^3$, less than 1.10 g/cm$^3$. In an embodiment, the $d_{ac}$ is more than 1.00 g/cm$^3$, more than 1.03 g/cm$^3$, more than 1.05 g/cm$^3$, more than than 1.07 g/cm$^3$, more than 1.10 g/cm$^3$, more than 1.12 g/cm$^3$, and more than 1.15 g/cm$^3$. In a preferred embodiment, $d_{ac}$ is more than 1.00 g/cm$^3$ and less than 1.33 g/cm$^3$.

In an embodiment, the radius r, is less than 50 microns, less than 45 microns, less than 40 microns or less than 35 microns. In an embodiment, the radius r is greater than 5 microns, greater than 10 microns, greater than 20 microns and greater than 25 microns. For example, the radius r is less than 50 microns and greater than 5 microns.

Bubble size may be measured from images obtained using suitable instruments and methods known to those skilled in the art. Preferred methods comprise X-ray tomography and/or confocal laser scanning microscopy (CLSM), more preferably X-ray tomography.

DEPOSITION

The problem of adding inclusions is not specific to a particular type of apparatus for depositing or aerating chocolate, but is experienced with different machines for depositing other food compositions, whether aerated or not. Examples of apparatus for depositing a liquid, semi-liquid or semi-solid food composition that may be used in a process of the invention are described below.

An example of a suitable depositing apparatus is described in WO 2010/102716. The example apparatus comprises a fixed volume chamber for receiving the food composition under a positive pressure, the chamber being defined by chamber walls, one of the chamber walls being provided with an outlet orifice for depositing the food composition, the outlet orifice being provided with a first sealing surface. The apparatus also comprises a valve spindle arranged for reciprocating movement within the chamber, the length direction of the valve spindle extending substantially perpendicular to the chamber wall in which the outlet orifice is provided, a first end of the valve spindle being provided with a second sealing surface. The second sealing surface of the valve spindle is arranged for abutting the first sealing surface of the outlet orifice to thereby close the outlet orifice. This apparatus may be used in a process and/or comprise part of an apparatus of the present invention and/or be operated in line with an apparatus of the present invention to provide the fluid composition to the outer orifice of a nozzle of the invention as described herein.

The example apparatus for depositing a liquid, semi-liquid or semi-solid food composition comprises a fixed volume chamber for receiving the food composition under a positive pressure in the range of 4 to 12 bars, for example 4 to 6 bars, optionally such food composition having already been aerated (e.g. by gas injection or mixing) before being transported to the chamber. The chamber may optionally further comprise an aerating means (e.g. means to inject gas into the liquid optionally under high pressure) to aerate or further aeration the liquid content.

This apparatus is also referred to herein as a depositor and in a depositor of the present invention (which may optionally also be an aerator) comprises at least one nozzle of and/or capable of being used in a process of the present invention in conjunction with one or more of the other apparatus features described below.

In the example depositor the chamber is provided with an inlet and an outlet for supplying the food composition to the chamber from a pump and suitable pumps and supply lines will be apparent to those skilled in the art. The pump is configured to supply the food composition to the chamber at a rate of, for example, approximately 125% of the intended depositing rate.

Sidewalls of the chamber may be are provided as a unitary body formed of, for example, a stainless steel casting. Bottom and top walls of the chamber, which are substantially flat, may be formed of, for example, stainless steel plates bolted and sealed to the sidewalls. The bottom wall of the chamber may be provided with a plurality of apertures having a two dimensional arrangement for producing a desired depositing pattern, for example a two dimensional arrangement of apertures may be provided in a regular row and column array of say 64 apertures. Other arrangements are, however, possible. A nozzle is fitted into each of the apertures and defines an outlet orifice through which the food composition is deposited. An inside surface of the nozzle may be provided with a conical surface, which surface serves as a first sealing surface. The apparatus may also comprises a plurality of valve spindles associated with respective outlet orifices and a plurality of linear pneumatic actuators associated with respective valve spindles.

Each valve spindle may be in the form of an elongate circular rod, or needle. A first (lower) end of the spindle may be provided with a conical surface which serves as a second sealing surface and is adapted for making sealing contact with the first sealing surface of a respective nozzle, as described above. The valve spindle may have a length slightly less than the internal height of the chamber (measured across the inner surfaces of the bottom and top plates of the chamber). A second (upper) end of the valve spindle may be attached to a respective actuator which is itself attached to the top plate of the chamber. The actuator may be attached to the top plate of the chamber such that it can be accessed for repair or replacement without significant disassembly of the apparatus.

The actuators and valve spindles may be arranged with their axes perpendicular to the bottom and top plates such that the actuators can be operated to longitudinally displace the valve spindles relative to the chamber walls with reciprocating movement. The valve spindles may be arranged such that, with the valve spindles in their upper position, the outlet orifices are open so the food composition is deposited. With the valve spindles in their lower position, the sealing surfaces of the nozzle components and the valve spindles may be in sealing contact to thereby close the outlet orifices and prevent the flow of the food composition.

The actuators may be operated independently so that the flow of food composition can be varied between different outlet orifices, with a selectable number of the outlet orifices being open at any one time.

The actuators may be each connected to a pneumatic circuit (not shown) for providing linear movement and a controller (not shown) for controlling the pneumatic circuits. Suitable pneumatic circuits will be known to those skilled in the art. Suitable controllers include programmable logic controllers and suitably programmed computers.

In use of the apparatus the controller may be arranged to control the actuators to independently open and close the respective outlet orifices for starting and stopping the deposition of the food composition. The flow rate of the food composition through the outlet orifices may be controlled by opening and closing the outlet orifices in a cycle having a frequency of at least 2 Hz, and by varying the proportion of the cycle time in which the outlet orifice is open (i.e. varying the mark-space ratio).

The flow rate of the food composition through the outlet orifices may also depend, at least in part, on the pressure of the food composition in the chamber. The controller may therefore be provided with the output from a pressure sensor (not shown), which measures the pressure in the chamber. The controller may control the actuators based on the sensed pressure.

Rather than pneumatic actuators, the actuators may alternatively be other types of actuator, such as moving coil electrical actuators. Moving coil electrical actuators may be capable of accurate positional control so that the flow rate of the food composition through the outlet orifices can be varied by adjusting the linear position of the valve spindles.

The apparatus may be provided with a spreader plate attached to the bottom plate. The spreader plate may connect the outlet orifices to a larger plurality of spreader plate outlets. The spreader plate outlets may be provided with a pressure operated valve, the pressure operated valve being arranged to close when a pressure drops below a predetermined pressure greater than atmospheric pressure.

The apparatus may be arranged in an intermittent motion (indexed) food composition moulding line. When the line is stationary, the apparatus may be moved over a mould cavity at high speed to fill the mould cavity with the food composition.

Commercially available piston or rotary valve depositors may be used, for example, those supplied by Buhler-Bindler or Knobel.

Of course, the nozzle for deposition must be of sufficient size to allow the inclusions defined above to pass through.

Additionally, in a preferred embodiment, the depositor is capable of being placed under pressure to maintain aeration in the product. The degree of pressure is defined above for the vane pump. Commercially available pressurised depositors are available from Wymbs Engineering (MK2) and Haas, Depositing Systems.

However, an advantage of the method of the present invention is that even when the depositor is unpressurised and low density inclusions (e.g. rice crispies) are used, the use of the positive displacement pump and optionally the additional mixer ensures that the inclusions do not rise to the top of the product in the mould (e.g. on the back of a chocolate bar - see examples). The present invention offers a simplified and improved distribution across a broader range of inclusions than density and viscosity matching solutions, i.e. the present invention offers improvements in reduction of migration of even low density inclusions.

Additionally, a further advantage is that the present invention does not have separation issues in the depositor hopper. This means that it is not necessary to use an agitator (as for non-aerated products) which would destabilize the aeration. Therefore, the density matching or viscosity increase (more likely to be the case for low density inclusions, e.g. rice cripies) enables the use of a non-pressurised depositor because there is not the need for constant agitation.

Whilst specific dual channel nozzle deposition methods may offer a maintenance ofof aeration quality, the present invention provides a more even distribution of inclusions and more accurate dosing. It is also a a more robust process industrially. The examples show these advantages.

GENERAL FEATURES

As used herein, the expression "food-grade" when referring to a material herein denotes that the material is permitted to be in contact with foodstuffs suitable for human consumption as defined under the relevant local legislation (also referred to herein as "suitable for food contact"). At the date of filing the present application in the European Union the relevant rules for materials that are suitable for food contact include the EU Regulation 1935/2004, entitled "Framework Regulation on materials and articles intended to come into contact with food" and EU regulation 2023/2006, entitled "Good Manufacturing Practice for materials and articles intended to come in contact with food". Also relevant are EU Regulations: 10/2011 on food contact with plastic materials (as amended by 2015/174, 202/2014, 1183/2012, 1183/2012, 1282/2011, 321/2011, 284/2011); 450/2009 on food contact with active and intelligent materials; 282/2008 on food contact with recycled plastic materials; 42/2007/42 on food contact with regenerated cellulose film; 1895/2005 on restrictions of food contact with certain epoxy materials; and EU Directives 500/1984 on national law of food contact with ceramic articles; and 11/1993 on release of N-nitrosamines and N-nitrosatable substances. Thus as used herein "food-grade material" denotes that said material is compliant with the aforementioned EU Regulations and Directives on suitability for food contact and preferably such food-grade materials will also those materials that will continue to be compliant with any updated rules and lists of materials issued under these and/or related EU Regulations or Directives.

Although particular embodiments are described herein, it will be appreciated that the claimed subject matter is not limited to the specific embodiments described, and that alternative configurations are possible within the scope of the appended claims.

Compositions of the invention may usefully be chocolate products (as defined herein), more usefully be chocolate or a chocolate compound. Independent of any other legal definitions that may be used compositions of the invention that comprises a cocoa solids content of from 25% to 35% by weight together with a milk ingredient (such as milk powder) may be informally referred to herein as 'milk chocolate' (which term also encompasses other analogous chocolate products, with similar amounts of cocoa solids or replacements therefor). Independent of any other legal definitions that may be used compositions of the invention that comprises a cocoa solids content of more than 35% by weight (up to 100% (i.e. pure cocoa solids) may be informally referred to herein as 'dark chocolate' (which term also encompasses other analogous chocolate products, with similar amounts of cocoa solids or replacements therefor).

The term 'chocolate' as used herein denotes any product (and/or component thereof if it would be a product) that meets a legal definition of chocolate in any jurisdiction and also include product (and/or component thereof) in which all or part of the cocoa butter (CB) is replaced by cocoa butter equivalents (CBE) and/or cocoa butter replacers (CBR).

The term 'chocolate compound' as used herein (unless the context clearly indicates otherwise) denote chocolate like analogues characterized by presence of cocoa solids (which include cocoa liquor/mass, cocoa butter and cocoa powder) in any amount, notwithstanding that in some jurisdictions compound may be legally defined by the presence of a minimum amount of cocoa solids.

The term 'chocolate product' as used herein denote chocolate, compound and other related materials that comprise cocoa butter (CB), cocoa butter equivalents (CBE), cocoa butter replacers (CBR) and/or cocoa butter substitutes (CBS). Thus, chocolate product includes products that are based on chocolate and/or chocolate analogues, and thus for example may be based on dark, milk or white chocolate.

Unless the context clearly indicates, otherwise it will also be appreciated that in the present invention, any one chocolate product may be used to replace any other chocolate product and neither the term chocolate nor compound should be considered as limiting the scope of the invention to a specific type of chocolate product. Preferred chocolate product comprises chocolate and/or compound, more preferred chocolate product comprises chocolate, most preferred chocolate product comprises chocolate as legally defined in a major jurisdiction (such as Brazil, EU and/or US).

The chocolate product of the invention may be used to mould a tablet and/or bar, to coat confectionery items and/or to prepare more complex confectionery products. Optionally, prior to its use in the preparation of a chocolate product confectionery product, inclusions according to the desired recipe may be added to the chocolate product. As it will be apparent to a person skilled in the art, in some instances the product of the invention will have the same recipe and ingredients as the corresponding composition and/or mass while in other instances, particularly where inclusions are added or for more complex products, the final recipe of the product may differ from that of the composition and/or mass used to prepare it.

In chocolate product confectionery, the cocoa butter (CB) may be replaced by fats from other sources. Such products may generally comprise one or more fat(s) selected from the group consisting of: lauric fat(s) (e.g. cocoa butter substitute (CBS) obtained from the kernel of the fruit of palm trees); non-lauric vegetable fat(s) (e.g. those based on palm or other specialty fats); cocoa butter replacer(s) (CBR); cocoa butter equivalent(s) (CBE) and/or any suitable mixture(s) thereof. Some CBE, CBR and especially CBS may contain primarily saturated fats and very low levels of unsaturated omega three and omega six fatty acids (with health benefits). Thus in one embodiment in chocolate product confectionery of the invention such types of fat are less preferred than CB.

In the discussion of the invention herein, unless stated to the contrary, the disclosure of alternative values for the upper and lower limit of the permitted range of a parameter coupled with an indicated that one of said values is more preferred than the other, is to be construed as an implied statement that each intermediate value of said parameter, lying between the more preferred and less preferred of said alternatives is itself preferred to said less preferred value and also to each less preferred value and said intermediate value.

For all upper and/or lower boundaries of any parameters given herein, the boundary value is included in the value for each parameter unless stated otherwise, i.e. "less than" means "less than and including" and "greater than" means "greater than and including" but "less than and not including" means the boundary value is not included.

Unless otherwise specified % in the present description correspond to wt%.

It will be understood that the total sum of any quantities expressed herein as percentages cannot (allowing for rounding errors) exceed 100%. For example, the sum of all components of which the composition of the invention (or part(s) thereof) comprises may, when expressed as a weight (or other) percentage of the composition (or the same part(s) thereof), total 100% allowing for rounding errors. However, where a list of components is non exhaustive the sum of the percentage for each of such components may be less than 100% to allow a certain percentage for additional amount(s) of any additional component(s) that may not be explicitly described herein.

The term "substantially" (or "essentially") as used herein may refer to a quantity or entity to imply a large amount or proportion thereof. Where it is relevant in the context in which it is used "substantially" can be understood to mean quantitatively (in relation to whatever quantity or entity to which it refers in the context of the description) there comprises an proportion of at least 80%, preferably at least 85%, more preferably at least 90%, most preferably at least 95%, especially at least 98%, for example about 100% of the relevant whole. By analogy the term "substantially-free" or "free" may similarly denote that quantity or entity to which it refers comprises no more than 20%, preferably no more than 15%, more preferably no more than 10%, most preferably no more than 5%, especially no more than 2%, for example about 0% of the relevant whole.

The term "comprising" as used herein will be understood to mean that the list following is non exhaustive and may or may not include any other additional suitable items, for example one or more further feature(s), component(s), ingredient(s) and/or substituent(s) as appropriate. Thus the words "comprise", "comprising" and the like are to be construed in an inclusive sense as opposed to an exclusive or exhaustive sense; that is to say, in the sense of "including, but not limited to".

The invention will now be described in further details in the following non-limiting examples. The following Examples are provided of illustrative purposes only and they are not to be considered in any way limiting to the scope of the present invention.

Examples

Example 1

Aeration of a liquid milk chocolate was carried out using an aerator and the chocolate had the following parameters:

| PV (Pa.s) | | YV (Pa) | | D90 ($\mu$m) | |
|---|---|---|---|---|---|
| min | max | min | max | Min | Max |
| 5.5 | 7.5 | 7.5 | 9.0 | 28 | 36 |

Aeration was carried out using an aerator as described in WO2005/063036 using nitrogen and aiming for an aeration level of 10% (by volume).

The settings were:

Mass temperature: 30 deg C
Back pressure setting: 3 bar
Pump #1 speed: 6 rpm
Pump #2 speed: 12 rpm
Beater speed: 250 rpm
Gas flow rate (N2): 0.8 l/min

A Tetra-Pak Inclusions feeder for ice cream was additionally jacketed to allow an improved temperature control. The jacketing was with temperature controlled water (pipework jackets temperature, generally 28 -33°C)

The feeder had 6 vanes and was operated at a pressure of 3 bar.

Tetra-Pak Settings:

Auger Screw Speed: 2 (50Hz, at approximately 10rpm)
Vane Pump Speed: setting 0 (minimum running velocity, approximately 15rpm)
Dynamic Mixer Speed after the Tetra-Pak: 2 (measured at 21rpm, approximately 5Hz)

The following inclusions were deposited in the chocolate: almonds 16% and rice crispies 8%.

The chocolate throughput went up to an absolute maximum of 50 kg/hr.

Visual inspection of the product showed that the inclusions were well mixed into the chocolate mass, with no visible uncoated inclusions on the backs of the bars and the inclusions were well distributed throughout the chocolate.

Example 2

Aeration of a liquid milk chocolate (was carried out using an aerator as described in WO2005/063036 using nitrogen and aiming for an aeration level of 10% (by volume).

Temper Settings (Aasted AMC Supershear):

Pump speed - 110%
Pre-heat - 45 deg C
Stage 1 - 18 deg C
Stage 2 - 27.6 deg C
Stage 3 - 28.9 deg C

Aeration Settings:

Product temperature pre-beater: 29.9 deg C
Back pressure setting: 8 bar
Pump #1 speed: 6 rpm
Pump #2 speed: 12 rpm
Beater speed: 250 rpm
Gas flow rate (N2): 0.74 l/min

Product temp ex. beater: 29.8 deg C

Tetra-Pak Settings:

Auger Screw Speed: 4 (70Hz)
Vane Pump Speed: 0 (slowest possible value for speed of approximately 15rpm)
Dynamic Mixer Post Vane Pump: 2 (measured at 21rpm, approximately 5hz)

The product obtained had no more visible bubbles than a non-aerated equivalent product. Accordingly, the method of the present invention affords a product where aeration is carried out with inclusions but without any impact on the visual appeal of the product.
The chocolate throughput went up to an absolute maximum of 50 kg/hr.

Example 3

A trial based on the Crunch® format at mould speed of 6 moulds/minute at 20 cavities per deposit. The target weight was 36g with 2.88g of rice crispies and 35.12g chocolate. The rice crispies were sieved to ensure a size of no greater than 6mm. Almonds were also dosed but not sieved.
Recipes 2 and 4 discussed below were used to make a chocolate product of the Crunch® format. Recipe 3 was used to make a chocolate product of the Larin® format. Images of these products are shown in the figures.
The above equipment set up was replicated with the exception that a Buhler-Bindler depositor was connected to increase the deposition rate into moulds.
The chocolate throughput went up to an absolute maximum of 250 kg/hr.
The following milk chocolates recipes were tested under the following conditions:

|  | Recipe 2 | Recipe 3 | Recipe 4 |
|---|---|---|---|
| **YV (Pa)** | 8.312 | 5.8 | 8.31 |
| **PV (Pa.s)** | 7.215 | 5.9 | 4.69 |
| **D90 Particle Size (μm) (measured using a micrometer)** | 33 | 20 | 16 |
| **PGPR Addition (%)** | 0.2 | 0.2 | N/A |
| **Lecithin Addition (%)** | 0.4 | 0.4 | 0.5 |
| **Total Fat (%)** | 28 | 30 | 29 |

| Trial Details | | | Aeration Parameters | | | | | Inclusions Feeder Settings | | | |
|---|---|---|---|---|---|---|---|---|---|---|---|
| Recipe | Inclusion Type | Depositor Configuration | Pump Speeds (RPM) | | Beater Speed (RPM) | Gas Flow (l/min) | Tetra Pressure (bar) | Inclusions Dosing Auger | | Vane Pump Speed (Hz) | Dynamic Mixer Speed (RPM) |
| | | | 1 | 2 | | | | Speed (Hz) | Time (s) | | |
| Recipe 2 | Crispies | Pressurised | 60 | 65 | 300 | 1.1 | 1.3 | 70 | 8 | 30 | 21RPM |
| | Almond | Pressurised | 115 | 125 | 375 | 2.3 | 1.75 - 1.9 | 87 | 8 | 40 | 21RPM |
| Recipe 3 | Almond | Pressurised | 115 | 125 | 375 | 2.8 | 1.9 | 87 | 8 | 40 | 21RPM |
| | Crispies | Pressurised | 60 | 65 | 375 | 1.2 | 1.2 | 78 | 8 | 40 | 21RPM |
| | Crispies | Unpressurised | 60 | 65 | 375 | 1.2 | 1.6-2 | 72 | 8 | 40 | 21RPM |
| Recipe 4 | Crispies | Unpressurised | 60 | 65 | 375 | 1.2 | 1.6-2 | 100 | 8 | 40 | 21RPM |

The pressurised trials were conducted using a pressure plate bolted to the top of the depositor (where the hopper would normally sit). It was sealed with a thick rubber gasket (required to create an effective seal due to the irregularities of the depositor top). The aerated chocolate containing inclusions, was fed by means of a manifold evenly across the depositor block.

The unpressurised trials were conducted by simply filling the depositor from the exit of the flexible hose used to supply the manifold in the pressurised trial.

The dynamic mixer after the vane pump was set at 21 RPM for the duration of the trials, giving satisfactory mixing without any apparent destruction of inclusions.

The standard cooling parameters were used (10°C). No issues were encountered in terms of cooling and demoulding.

The porosity of the finished bars was validated by measuring the density of moulded bars containing no inclusions, collected either at the start or the end of the particular run of interest.

|  | Pressurised | | | | Non-Pressurised | |
| --- | --- | --- | --- | --- | --- | --- |
| Mass | Crispies | | Almonds | | Crispies | |
|  | Initial | Final Product | Initial | Final Product | Intitial | Final Product |
| Recipe 2 | 11.23% | 10.85% | 10.40% | 8% | N/A | N/A |
| Recipe 3 | 12.90% | 10.70% | 11.80% | 10.20% | 13.00% | N/A |
| Recipe 4 | N/A | N/A | N/A | N/A | 12.20% | 11.70% |

The trials were successful in terms of producing finished product of an acceptable appearance. No issues were seen on the top, moulded surface of the bars. In terms of any visual defects that were noticed, these were insignificant enough to be masked well by the presence of the inclusions.

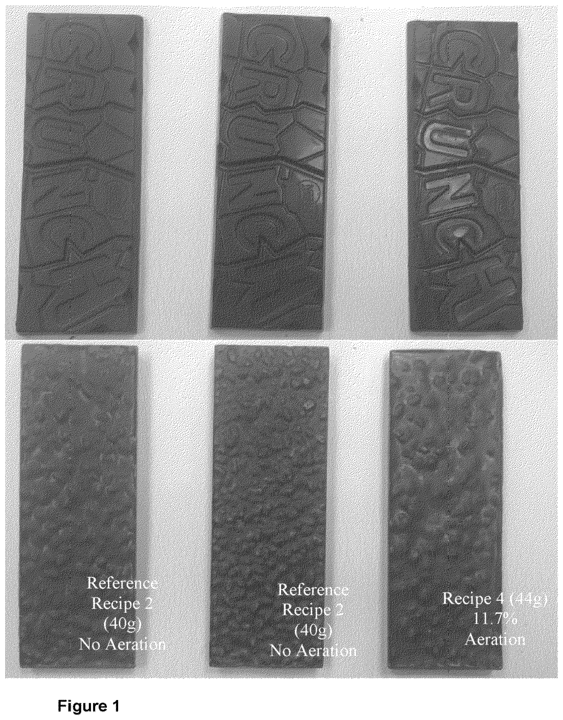

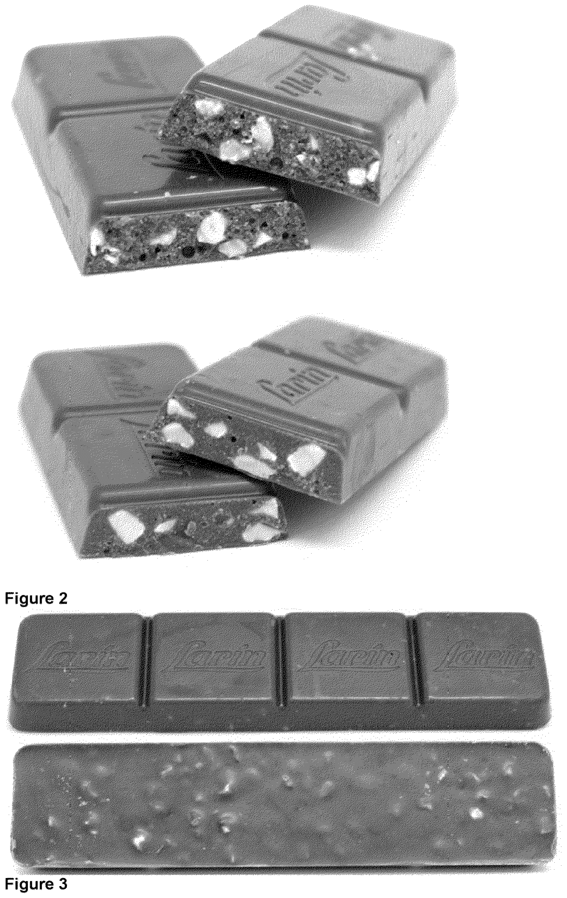

Figure 1 displays aerated Recipe 2 and Commercial Reference Recipes 2 and 4. Figure 2 displays aerated Recipe 3 (10.2%) and Commercial Reference Recipe 3. In respect of Figure 3, it is noted that the commercial product displays air holes despite no designated aeration owing to the presence of inclusions. Accordingly, this evidences that the present invention affords aeration with inclusions such that the degree of aeration and appearance of the product is not impacted.

Example 4

Using the equipment set up as above, an experiment was carried out with no inclusions, to assess whether speed of the vane pump impacted aeration quality / level of incorporation of atmospheric air, starting at a vane pump speed of 2Hz and increasing the speed to 30Hz and then 40Hz. No negative impact was seen in terms of aeration quality by the pump speed in the interior of the bar.

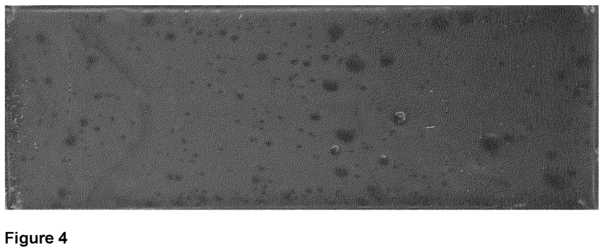

However, it is noted that the presence of inclusions improved the visible appearance of the product from a quality aspect. The non-inclusion products displayed black spots on the back of the bar (i.e. the side not in contact with the mould and facing upwards). See Figure 4. Hence, the method of the present invention enables a retention of aeration by virtue of the method used and the presence of inclusions. This is unexpected based on the previously known methods because the presence of inclusions typically introduces atmospheric air *into* a product impacting the quality of aeration.

**Claims**

1. A process for preparing an aerated food composition having inclusions dispersed therein, the process comprising the steps of:

    a) providing an apparatus for dosing edible inclusions, the apparatus comprising a positive-displacement pump and the apparatus is capable of operating under pressure;
    b) feeding inclusions into the positive-displacement pump;
    c) feeding fluid aerated food composition into the positive-displacement pump down-stream of the inclusions; and
    d) blending the inclusions with the fluid aerated food composition in the positive-displacement pump to form an aerated food composition having inclusions dispersed therein, wherein the fluid is aerated to between 1% and 20% of gas by volume and the aerated food composition comprising inclusions and wherein the aerated food composition is chocolate or chocolate compound, wherein said chocolate compound is a chocolate like analogue **characterized by** presence of cocoa solids.

**2.** The process of claim 1, wherein the fluid aerated food composition is under pressure of between 1.10 and 30 bar.

**3.** The process of claim 1 or claim 2, wherein the positive-displacement pump comprises between 3 and 10 vanes.

**4.** The process as claimed in any preceding claim, wherein the inclusions are fed constantly or intermittently into the positive displacement pump, preferably at a rate of between 1.0wt% and 45.0wt% based on the total weight of the inclusions and aerated food composition.

**5.** The process as claimed in any preceding claim, wherein the inclusions are fed between vanes of the pump, wherein the vanes retract when the inclusions reach the fluid aerated food composition or wherein the inclusions are fed into a chamber of a piston or plunger pump and the piston or pump deposits the inclusions into the aerated food composition.

**6.** The process as claimed in any preceding claim, wherein the aeration of the food composition comprises injecting gas into the fluid to form bubbles having a mean size of less than 100 microns (micro-aerating) or to form bubbles having a mean size of greater than 100 microns (macro-aerating).

**7.** A process as claimed in any preceding claim, where the fluid is aerated to the extent of having at least 5% of gas by volume (by total volume of the fluid).

**8.** A process as claimed in any preceding claim, wherein the fluid is aerated to between 10% and 20% of gas by volume and the aerated food composition comprising inclusions has an aeration degree of between 65% and 99.5% of the aeration degree of the fluid, optionally between 75% and 98%.

**9.** A process as claimed in any preceding claim, wherein an inline mixer placed at the outlet of the positive-displacement pump and an additional homogenization step is carried out.

**10.** A process as claimed in claim 9, wherein the inline mixer operates at a speed of between 1 and 100 RPM.

**11.** A process as claimed in any preceding claim, where the process is for preparing a moulded micro-aerated chocolate-composition having inclusions dispersed therein, the process comprising the steps of

a) providing an apparatus for dosing edible inclusions, the apparatus comprising a positive-displacement pump and the apparatus is capable of operating under pressure;
b) feeding inclusions into the positive-displacement pump;
c) feeding an aerated fluid chocolate-composition into the positive-displacement pump down-stream of the inclusions;
d) blending the inclusions with the aerated fluid chocolate-composition in the positive-displacement pump to form an aerated chocolate-composition having inclusions dispersed therein;
e) depositing the aerated fluid chocolate-composition into moulds;
f) solidifying the moulded composition from depositing step e); and
g) demoulding a solid moulded product from solidification step f) to obtain a moulded micro-aerated chocolate-composition having inclusions dispersed therein.

**12.** A process as claimed in any preceding claim, wherein the inclusions are selected from the group comprising: fruits or fruit pieces which may comprise: hard fruits, soft fruits, fruit powders and/or freeze-dried fruit pieces, candied fruit and/or alcohol-soaked fruit, crispy inclusions; herbs, cereals, chocolate or chocolate-composition, sugar confectionery and/or combinations thereof.

**13.** A process as claimed in any preceding claim, wherein inclusions are present between 1.0wt% and 45.0wt% of the aerated edible food, preferably between 5.0wt% and 20wt%.

**14.** A food composition obtained by a process as claimed in any of claims 1 to 13, the food composition having inclusions dispersed therein, preferably which comprises micro-aerated gas bubbles therein having a mean size of less than 100 microns, preferably which has inclusions homogenously dispersed therein, preferably which is a moulded product, wherein the food composition is chocolate or chocolate compound, wherein said chocolate compound is a chocolate like analogue **characterized by** presence of cocoa solids.

**15.** A food composition and/or product as claimed in claim 14, which comprises micro-aerated chocolate and/or compound having inclusions dispersed therein.

**16.** An apparatus for preparing an aerated food composition having inclusions dispersed therein comprising an apparatus for dosing edible inclusions, the apparatus comprising a positive-displacement pump and the apparatus is capable of operating under pressure in combination with an apparatus for aerating a food composition, wherein the positive displacement pump is a rotary vane pump comprising less than or equal to 20 vanes, wherein the inclusions are fed between vanes of the pump, wherein the vanes retract when the inclusions reach the fluid aerated food composition, wherein the aerated food composition is chocolate or chocolate compound, wherein said chocolate compound is a chocolate like analogue **characterized by** presence of cocoa solids.

**17.** The apparatus of claim 16, that is capable of operating the process of any of claims 1 to 13.

**Patentansprüche**

**1.** Verfahren zum Herstellen einer belüfteten Nahrungsmittelzusammensetzung, die darin dispergierte Einschlüsse aufweist, das Verfahren umfassend die Schritte:

a) Bereitstellen einer Vorrichtung zum Dosieren essbarer Einschlüsse, die Vorrichtung umfassend eine Verdrängerpumpe und wobei die Vorrichtung in der Lage ist, unter Druck in Betrieb zu sein;
b) Einleiten von Einschlüssen in die Verdrängerpumpe;
c) Einleiten einer flüssigen belüfteten Nahrungsmittelzusammensetzung in die Verdrängerpumpe stromabwärts der Einschlüsse; und
d) Vermengen der Einschlüsse mit der flüssigen belüfteten Nahrungsmittelzusammensetzung in der Verdrängerpumpe, um eine belüftete Nahrungsmittelzusammensetzung, die darin dispergierte Einschlüsse aufweist, auszubilden, wobei die Flüssigkeit auf zwischen 1 Vol.-% und 20 Vol.-% Gas belüftet wird und die belüftete Nahrungsmittelzusammensetzung Einschlüsse umfasst und wobei die belüftete Nahrungsmittelzusammensetzung Schokolade oder eine Schokoladenmischung ist, wobei die Schokoladenmischung ein schokoladenähnliches Analogon ist, das **gekennzeichnet ist durch** ein Vorhandensein von Kakaofeststoffen.

**2.** Verfahren nach Anspruch 1, wobei die flüssige belüftete Nahrungsmittelzusammensetzung unter einem Druck zwischen 1,10 und 30 bar steht.

**3.** Verfahren nach Anspruch 1 oder 2, wobei die Verdrängerpumpe zwischen 3 und 10 Schieber umfasst.

**4.** Verfahren nach einem der vorstehenden Ansprüche, wobei die Einschlüsse in die Verdrängerpumpe ständig oder intermittierend eingeleitet werden, vorzugsweise mit einer Rate zwischen 1,0 Gew.-% und 45,0 Gew.-% basierend auf dem Gesamtgewicht der Einschlüsse und der belüfteten Nahrungsmittelzusammensetzung.

**5.** Verfahren nach einem der vorstehenden Ansprüche, wobei die Einschlüsse zwischen die Schieber der Pumpe eingeleitet werden, wobei sich die Schieber zurückziehen, wenn die Einschlüsse die flüssige belüftete Nahrungsmittelzusammensetzung erreichen, oder wobei die Einschlüsse in eine Kammer einer Kolben- oder Tauchpumpe eingeleitet werden und der Kolben oder die Pumpe die Einschlüsse in die belüftete Nahrungsmittelzusammensetzung abscheidet.

**6.** Verfahren nach einem der vorstehenden Ansprüche, wobei die Belüftung der Nahrungsmittelzusammensetzung ein Einspritzen von Gas in die Flüssigkeit umfasst, um Blasen, die eine mittlere Größe von weniger als 100 Mikrometern (Mikrobelüften) aufweisen, auszubilden, oder um Blasen, die eine mittlere Größe von mehr als 100 Mikrometern (Makrobelüften) aufweisen, auszubilden.

**7.** Verfahren nach einem der vorstehenden Ansprüche, wo die Flüssigkeit bis zu dem Maß belüftet wird, dass sie mindestens 5 Vol.-% Gas (nach Gesamtvolumen der Flüssigkeit) aufweist.

**8.** Verfahren nach einem der vorstehenden Ansprüche, wobei die Flüssigkeit auf zwischen 10 Vol.-% und 20 Vol.-% Gas belüftet wird und die belüftete Nahrungsmittelzusammensetzung, umfassend Einschlüsse, einen Belüftungsgrad zwischen 65 % und 99,5 % des Belüftungsgrads der Flüssigkeit, optional zwischen 75 % und 98 %, aufweist.

9. Verfahren nach einem der vorstehenden Ansprüche, wobei ein Inline-Mischer an dem Auslass der Verdrängerpumpe platziert wird und ein zusätzlicher Homogenisierungsschritt durchgeführt wird.

10. Verfahren nach Anspruch 9, wobei der Inline-Mischer mit einer Geschwindigkeit zwischen 1 und 100 U/min in Betrieb ist.

11. Verfahren nach einem der vorstehenden Ansprüche, wobei das Verfahren zum Herstellen einer geformten mikrobelüfteten Schokoladenzusammensetzung, die darin dispergierte Einschlüsse aufweist, dient, das Verfahren umfassend die Schritte

   a) Bereitstellen einer Vorrichtung zum Dosieren essbarer Einschlüsse, die Vorrichtung umfassend eine Verdrängerpumpe und wobei die Vorrichtung in der Lage ist, unter Druck in Betrieb zu sein;
   b) Einleiten von Einschlüssen in die Verdrängerpumpe;
   c) Einleiten einer belüfteten flüssigen Schokoladenzusammensetzung in die Verdrängerpumpe stromabwärts der Einschlüsse;
   d) Vermengen der Einschlüsse mit der belüfteten flüssigen Schokoladenzusammensetzung in der Verdrängerpumpe, um eine belüftete Schokoladenzusammensetzung, die darin dispergierte Einschlüsse aufweist, auszubilden;
   e) Abscheiden der belüfteten flüssigen Schokoladenzusammensetzung in Formen;
   f) Verfestigen der geformten Zusammensetzung aus Abscheideschritt e); und
   g) Entformen eines festen geformten Produkts aus Verfestigungsschritt f),

   um eine geformte mikrobelüftete Schokoladenzusammensetzung, die darin dispergierte Einschlüsse aufweist, zu erhalten.

12. Verfahren nach einem der vorstehenden Ansprüche, wobei die Einschlüsse aus der Gruppe ausgewählt sind, umfassend: Früchte oder Fruchtstücke, die umfassen können: harte Früchte, weiche Früchte, Fruchtpulver und/oder gefriergetrocknete Fruchtstücke, kandierte Früchte und/oder in Alkohol getränkte Früchte, knusprige Einschlüsse; Kräuter, Getreide, Schokolade oder Schokoladenzusammensetzung, Zuckerwaren und/oder Kombinationen davon.

13. Verfahren nach einem der vorstehenden Ansprüche, wobei Einschlüsse zwischen 1,0 Gew.-% und 45,0 Gew.-%, vorzugsweise zwischen 5,0 Gew.-% und 20 Gew.-%, des belüfteten essbaren Nahrungsmittels vorhanden sind.

14. Nahrungsmittelzusammensetzung, die durch ein Verfahren nach einem der Ansprüche 1 bis 13 erhalten wird, wobei die Nahrungsmittelzusammensetzung darin dispergierte Einschlüsse aufweist, die vorzugsweise mikrobelüftete Gasbläschen darin umfasst, die eine mittlere Größe von weniger als 100 Mikrometern aufweisen, die vorzugsweise darin homogen dispergierte Einschlüsse aufweist, die vorzugsweise ein geformtes Produkt ist, wobei die Nahrungsmittelzusammensetzung Schokolade oder die Schokoladenmischung ist, wobei die Schokoladenmischung ein schokoladenähnliches Analogon ist, das **gekennzeichnet ist durch** das Vorhandensein von Kakaofeststoffen.

15. Nahrungsmittelzusammensetzung und/oder -produkt nach Anspruch 14, das mikrobelüftete Schokolade und/oder eine Mischung, die darin dispergierte Einschlüsse aufweist, umfasst.

16. Vorrichtung zum Herstellen einer belüfteten Nahrungsmittelzusammensetzung, die darin dispergierte Einschlüsse aufweist, umfassend eine Vorrichtung zum Dosieren essbarer Einschlüsse, die Vorrichtung umfassend eine Verdrängerpumpe und wobei die Vorrichtung in Kombination mit einer Vorrichtung zum Belüften einer Nahrungsmittelzusammensetzung in der Lage ist, unter Druck in Betrieb zu sein, wobei die Verdrängerpumpe eine Drehschieberpumpe ist, umfassend weniger als oder gleich 20 Schieber, wobei die Einschlüsse zwischen die Schieber der Pumpe eingeleitet werden, wobei sich die Schieber zurückziehen, wenn die Einschlüsse die flüssige belüftete Nahrungsmittelzusammensetzung erreichen, wobei die belüftete Nahrungsmittelzusammensetzung Schokolade oder die Schokoladenmischung ist, wobei die Schokoladenmischung ein schokoladenähnliches Analogon ist, das **gekennzeichnet ist durch** das Vorhandensein von Kakaofeststoffen .

17. Vorrichtung nach Anspruch 16, die in der Lage ist, das Verfahren nach einem der Ansprüche 1 bis 13 zu betreiben.

**Revendications**

1. Procédé de préparation d'une composition alimentaire aérée dans laquelle sont dispersées des inclusions, le procédé comprenant les étapes consistant à :

   a) fournir un appareil pour doser des inclusions comestibles, l'appareil comprenant une pompe volumétrique et l'appareil peut fonctionner sous pression ;
   b) introduire des inclusions dans la pompe volumétrique ;
   c) introduire la composition alimentaire aérée fluide dans la pompe volumétrique en aval des inclusions ; et
   d) mélanger les inclusions à la composition alimentaire aérée fluide dans la pompe volumétrique pour former une composition alimentaire aérée dans laquelle sont dispersées des inclusions, dans lequel le fluide est aéré jusqu'à une teneur en gaz comprise entre 1 % et 20 % en volume et la composition alimentaire aérée comprenant des inclusions et dans lequel la composition alimentaire aérée est du chocolat ou un composé de chocolat, dans lequel ledit composé de chocolat est un analogue du chocolat **caractérisé par** une présence de matières sèches de cacao.

2. Procédé selon la revendication 1, dans lequel la composition alimentaire aérée fluide est soumise à une pression comprise entre 1,10 et 30 bars.

3. Procédé selon la revendication 1 ou la revendication 2, dans lequel la pompe volumétrique comprend entre 3 et 10 pales.

4. Procédé selon l'une quelconque revendication précédente, dans lequel les inclusions sont introduites de manière constante ou intermittente dans la pompe volumétrique, de préférence à un débit compris entre 1,0 % en poids et 45,0 % en poids par rapport au poids total des inclusions et de la composition alimentaire aérée.

5. Procédé selon l'une quelconque revendication précédente, dans lequel les inclusions sont introduites entre des pales de la pompe, dans lequel les pales se rétractent lorsque les inclusions atteignent la composition alimentaire aérée fluide ou dans lequel les inclusions sont introduites dans une chambre d'une pompe à piston ou à plongeur et le piston ou la pompe dépose les inclusions dans la composition alimentaire aérée.

6. Procédé selon l'une quelconque revendication précédente, dans lequel l'aération de la composition alimentaire comprend l'injection de gaz dans le fluide pour former des bulles d'une taille moyenne inférieure à 100 microns (micro-aération) ou pour former des bulles d'une taille moyenne supérieure à 100 microns (macro-aération).

7. Procédé selon l'une quelconque revendication précédente, dans lequel le fluide est aéré dans la mesure où il contient au moins 5 % de gaz en volume (par rapport au volume total du fluide).

8. Procédé selon l'une quelconque revendication précédente, dans lequel le fluide est aéré à une teneur en gaz comprise entre 10 % et 20 % en volume et la composition alimentaire aérée comprenant des inclusions a un degré d'aération compris entre 65 % et 99,5 % du degré d'aération du fluide, éventuellement, entre 75 % et 98 %.

9. Procédé selon l'une quelconque revendication précédente, dans lequel un mélangeur en ligne est placé au niveau de la sortie de la pompe volumétrique et une étape supplémentaire d'homogénéisation est effectuée.

10. Procédé selon la revendication 9, dans lequel le mélangeur en ligne fonctionne à une vitesse comprise entre 1 et 100 tours/minute.

11. Procédé selon l'une quelconque revendication précédente, dans lequel le procédé consiste à préparer une composition chocolatée micro-aérée moulée dans laquelle sont dispersées des inclusions, le procédé comprenant les étapes consistant à :

    a) fournir un appareil pour doser des inclusions comestibles, l'appareil comprenant une pompe volumétrique et l'appareil peut fonctionner sous pression ;
    b) introduire des inclusions dans la pompe volumétrique ;
    c) introduire une composition chocolatée aérée fluide dans la pompe volumétrique en aval des inclusions ;
    d) mélanger les inclusions à la composition chocolatée fluide aérée dans la pompe volumétrique pour former une composition chocolatée aérée dans laquelle sont dispersées des inclusions ;

e) déposer la composition chocolatée fluide aérée dans des moules ;

f) solidifier la composition moulée issue de l'étape de dépôt e) ; et

g) démouler un produit moulé solide issu de l'étape de solidification f)

pour obtenir une composition chocolatée micro-aérée moulée dans laquelle sont dispersées des inclusions.

12. Procédé selon l'une quelconque revendication précédente, dans lequel les inclusions sont choisies dans le groupe comprenant : des fruits ou des morceaux de fruits qui peuvent comprendre : des fruits durs, des fruits mous, des poudres de fruits et/ou des morceaux de fruits lyophilisés, des fruits confits et/ou des fruits imbibés d'alcool, des inclusions croustillantes ; des herbes, des céréales, du chocolat ou une composition chocolatée, des produits de confiserie et/ou des combinaisons de ceux-ci.

13. Procédé selon l'une quelconque revendication précédente, dans lequel des inclusions sont présentes entre 1,0 % en poids et 45,0 % en poids de l'aliment comestible aéré, de préférence entre 5,0 % en poids et 20 % en poids.

14. Composition alimentaire obtenue par un procédé selon l'une quelconque des revendications 1 à 13, la composition alimentaire dans laquelle sont dispersées des inclusions, de préférence qui comprend des bulles de gaz micro-aérées d'une taille moyenne inférieure à 100 microns, de préférence qui a des inclusions dispersées de manière homogène, de préférence qui est un produit moulé, dans laquelle la composition alimentaire est du chocolat ou un composé de chocolat, dans laquelle ledit composé de chocolat étant un analogue du chocolat **caractérisé par** la présence de matières sèches de cacao.

15. Composition et/ou produit alimentaire selon la revendication 14, qui comprend du chocolat micro-aéré et/ou un composé dans lequel sont dispersées des inclusions.

16. Appareil de préparation d'une composition alimentaire aérée dans laquelle sont dispersées des inclusions, comprenant un appareil permettant de doser des inclusions comestibles, l'appareil comprenant une pompe volumétrique et l'appareil peut fonctionner sous pression en combinaison avec un appareil permettant d'aérer une composition alimentaire, dans lequel la pompe volumétrique est une pompe à pales rotatives comprenant un nombre de pales inférieur ou égal à 20, dans lequel les inclusions sont introduites entre les pales de la pompe, dans lequel les pales se rétractent lorsque les inclusions atteignent la composition alimentaire aérée fluide, dans lequel la composition alimentaire aérée est du chocolat ou un composé de chocolat, dans lequel ledit composé de chocolat est un analogue de chocolat **caractérisé par** la présence de matières sèches de cacao.

17. Appareil selon la revendication 16, pouvant faire fonctionner le procédé selon l'une quelconque des revendications 1 à 13.

**Figure 1**

Figure 2

Figure 3

Figure 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010102716 A
- EP 2016837 A
- EP 2016836 A
- WO 2015165926 A
- EP 1348342 A
- EP 1731040 A
- WO 2013139615 A
- US 3260210 A
- WO 2018054746 A
- WO 2016150977 A
- WO 2018206471 A
- DE 3521612
- WO 2005063036 A

**Non-patent literature cited in the description**

- **F. M. NELSEN ; F. T. EGGERTSEN.** Determination of Surface Area. Adsorption Measurements by Continuous Flow Method. *Anal. Chem.,* 1958, vol. 30 (8), 1387-1390